# EUROPEAN PATENT APPLICATION

(11) **EP 4 564 310 A1**
(43) Date of publication of application: **04.06.2025**
(21) Application number: 23213499.9
(22) Date of filing: 30.11.2023
(51) Int. Cl.: G06V 10/75, G06V 20/10, G06V 30/146

(54) **OBJECT RECOGNITION OF BUILDING ELEMENTS**

(71) Applicant: Mesh AG, 5242 Birr (CH)
(72) Inventor: Dugas, Daniel, 8004 Zürich (CH); Koh, Mattis, 8005 Zürich (CH); Mirjan, Ammar, 5415 Nussbaumen (CH)
(74) Representative: Keller Schneider Patent- und Markenanwälte AG

(57) **Abstract**

A computer-implemented method for identifying individual building elements and/or piles comprising a plurality of individual building elements, whereby the individual building elements in particular are intended for the construction of a building structure made from several of the individual building elements, whereby the method comprises the steps of:
A1
Taking an image of an individual building element and/or a pile to be identified;
A2
Performing an image analysis of the image to extract a shape of the building element and/or the pile in the image;
A3
Optionally, comparison of the extracted shape with one or more predefined shapes, which are defined by predefined data models of building elements and/or piles;
A4
Optionally, evaluating whether the extracted shape corresponds to one of the predefined shapes and, optionally, obtaining a deviation between the extracted shape and the corresponding predefined shape;
A5
Optionally, repeating the steps with a next building element or pile to be identified

## Description

### Technical field

The invention relates to a method for identifying individual building elements and/or piles comprising a plurality of individual building elements, whereby the individual building elements in particular are intended for the construction of a building structure made from several of the individual building elements. Further aspects of the invention are directed to producing individual building elements and/or piles comprising a plurality of individual building elements, as well as to a method for producing a building structure, especially a 3D reinforcement and/or formwork structure, from multiple individual building elements with a robotic system. A still further aspect of the invention is directed to a system that is configured for performing one or more of these methods.

### Prior art

In the dynamic landscape of modern construction, the integration of automation has ushered in a new era of efficiency, precision, and sustainability. Automated building processes represent a paradigm shift in the way structures are conceived, designed, and erected. This transformative approach leverages cutting-edge technologies to streamline construction workflows, minimize errors, and enhance overall project outcomes.

Automation in building processes involves the use of advanced robotics and digital technologies to perform tasks traditionally carried out by human labor. This encompasses a wide array of activities, including site preparation, material handling, assembly, and even project management. The aim is not only to expedite the construction timeline but also to elevate the quality of the built environment.

However, as with any transformative technology, the adoption of automated building processes comes with its own set of challenges. In particular, when increasing automation in construction processes, there is typically an increased need for automatic identification, verification, and locating of construction elements and materials.

In this regards, for example, the article "An Image-Based Steel Rebar Size Estimation and Counting Method Using a Convolutional Neural Network Combined with Homography" (Buildings 2021, 11(10), 463) describes an automated system to estimate the size of, and count, steel rebars in bale packing using computer vision techniques based on a convolutional neural network (CNN).

As a further example, the article "Depth-camera-based rebar detection and digital reconstruction for robotic concrete spraying" (Construction Robotics 2021, 5, 191) describes accurate digital reconstruction of steel rebar meshes using a set of industrial depth cameras. A construction example under investigation in this paper is robotic concrete spraying, where material is sprayed onto double-curved single layered rebar meshes. Before the spraying process can start, the location and geometry of the rebar mesh needs to be accurately know. We present an automatic image-based processing approach of depth images for grid point extraction at an accuracy of a few mm.

However, there is still a need for improved solutions that allow for further improving automatic building processes.

### Disclosure of the invention

It is an object of the present invention to provide solutions for simplifying and/or improving automatic building processes. Especially, the solution should allow for automatic identification, verification, locating, placing and/or assembling of building elements. Also, preferably, the solution should enable efficient, precise and/or safe methods for producing building elements and building structures.

Surprisingly it was found that these objects can be achieved by the features of claim 1. Especially preferred implementations and embodiments are the subject of the further claims and are set out in the following description.

A first aspect, the present invention is directed to a computer-implemented method for identifying individual building elements and/or piles comprising a plurality of individual building elements, whereby the individual building elements in particular are intended for the construction of a building structure made from several of the individual building elements. The method comprises the steps of:

| | |
|---|---|
| A1 | Taking an image of an individual building element and/or a pile to be identified; |
| A2 | Performing an image analysis of the image to extract a shape of the building element and/or the pile in the image; |
| A3 | Optionally, comparison of the extracted shape with one or more predefined shapes, which are defined by predefined data models of building elements and/or piles; |
| A4 | Optionally, evaluating whether the extracted shape corresponds to one of the predefined shapes and, optionally, obtaining a deviation between the extracted shape and the corresponding predefined shape; |
| A5 | Optionally, repeating the steps with a next building element or pile to be identified |

In contrast to other methods known from prior art, which are e.g. based on identification of tags attached to the building elements or the determination of isolated parameters such as diameters of rebars, the inventive method is based on shape recognition, which greatly improves efficiency, precision, reliability and possible applications.

Especially, the inventive method allows for identifying building elements or piles of such elements automatically in a very efficient, precise and reliable manner. Specifically, the shape recognition can be implemented such that the building element or piles of a plurality of building elements can be recognized essentially independently of the orientation of these items. Therefore, the elements do not need to be arranged in a specific manner and/or at a specific location.

Also, since the shape of the elements or piles is determined, gripping positions for robot-assisted further processing or any other position relevant for the processing of the building element or piles can be assigned directly in the shape recognition process or later on.

The inventive method enables many and very different applications, such as e.g.: identification of building elements or piles thereof at production or construction sites, improved automatic production processes for individual building elements with integrated quality control, as well as improved production processes of building structures made from building elements with less manual processing steps.

In the present context a "building element" in particular is meant to be a solid and shaped element with a defined structure that is intended for building purposes, e.g. for construction of a building structure.

The inventive method can be implemented with essentially any kind of building elements or piles thereof. For example, the building elements are reinforcement elements, support elements, beams, bricks, plates, panels, tiles, boards, and/or precast elements. For example, the elements can be made of metal, synthetic material, timber, mineral material, ceramics, mortar, concrete, gypsum, stone and/or composite materials.

Especially, the building element is a reinforcement element, especially a reinforcement element for mortar or concrete structures. In particular, the reinforcement element is made from metal and/or synthetic material, especially from steel.

In particular, the building element is made of metallic wire. Especially, the building element is a straight or a non-straight element, especially a 2D structure made of metallic wire with at least one curvature and/or kink. Such kind of elements can e.g. be used for producing reinforced mortar or concrete structures, especially as components of 3D grid formwork and/or 3D mesh structures that are used as reinforcement and/or formwork in mortar or concrete structures.

Also the building element, especially the individual reinforcing element, can be a multi-component structure, especially made from several interconnected components, e.g. wires. For example, the multi-component structure is a mat-like structure.

The building structure can in principle be any building structure. For example the building structure is a reinforcement structure, a support structure, an element of a building, in particular a mortar or concrete structure.

In particular, the building structure is a mesh structure for use in architecture, engineering and/or construction, in particular for use in reinforcement and/or formwork systems.

Especially the building structure is a three-dimensional (3D) reinforcement and/or formwork structure, especially for a mortar or concrete structure. E.g. the 3D reinforcement and/or formwork structure is a 3D mesh structure, especially made of steel wires.

For example, the 3D dimensional reinforcement and/or formwork structure is a grid structure that has a central region between a first grid side and a second grid side, the second grid side being arranged opposite the first grid side. In particular, the two grid sides are designed as two interconnected grids. In particular, the first grid side and the second grid side are connected to each other at a distance from each other by a plurality of bridging elements and/or webs. In an exemplary embodiment, first grid side and/or the second grid side is/are planar, curved and/or substantially uneven.

In an exemplary embodiment, a distance between the two grids is between 5 and 100 cm, preferably between 10 and 80 cm, particularly preferably between 15 and 50 cm.

Especially, bars forming the grids are aligned substantially horizontally and vertically. In an alternative embodiment, the bars of the grids are oriented substantially diagonally to a horizontal and a vertical direction

The three-dimensional reinforcement and/or formwork structure can e.g. be produced by providing a variety of building elements in the form of shaped wires, especially bent wires, whereby shaped wires may comprise different shapes, curvatures, and/or extensions. The shaped wires can be assembled, especially joined, e.g. via further building elements, especially connecting wires.

A pile comprises at least two, especially three, five, ten or more, building elements. Especially, the pile comprises at least two different building elements, differing in particular with respect to their size and/or shape. However, in another embodiment, the pile comprises only one type of building elements, which are identical in design.

In step A1, an image is taken. This can be done by any kind of image-generating device.

Especially, the image is taken by a camera and/or a laser scanner. A camera in particular is a camera for capturing images in the visible light spectrum. However, cameras operating in other wavelength regions may be used as well.

For example, the image-generating device is an image-and-distance sensor, especially an RGB-D sensor. An RGB-D sensor is meant to be a depth camera that provides both depth (D) and color (RGB) data as the output. However, other sensors are possible as well, e.g. a camera in combination with another range sensor, such as e.g. an ultrasound distance sensor.

The image-generating device can be located at a fixed position above a picking area. According to another possible embodiment, the image-generating device is mounted on a robotic system that preferably is movable in one, two or three spatial directions.

The image obtained in step A1 in particular is a 2D image of the individual building element and/or a pile in the visible spectrum.

In step A2, an image analysis of the image is performed to extract a shape of the building element and/or the pile in the image. "Image analysis" is a technique known per se. Thereby, information is extracted from images by means of digital image processing techniques. The image analysis can e.g. be implemented as 2D or 3D object recognition and/or image segmentation.

For example, in a first step, an algorithm determines which parts of the image are background and which parts belong to the individual building element and/or pile to be identified. The resulting contour can be used to locate the element or pile in the image and to derive the shape.

In the present context, the term "shape", as mentioned for example in step A2, in particular stands for a graphical representation of an object's form or its external boundary, outline, and/or external surface. The shape can be a two-dimensional (2D) shape, being represented in 2D space; or a 3D shape, i.e. being represented in a 3D space.

As it turned out, in the field of building technology the shape characterizes a huge variety of different building elements in a highly precise manner. Therefore, building elements and/or piles thereof can be identified in a highly reliable manner.

According to a special embodiment, steps A1 and A2 are repeated, in particular for a predefined period of time, e.g. for 1 - 200 seconds, and/or until an extracted shape in step A4 corresponds to one of the predefined shapes. The repetition of steps A1 and A2 can take place for example with frequency of at least 0.1 Hz, especially at least 1 Hz, in particular at least 3 Hz, or at least 10 Hz. This allows for a faster recognition of the building element or pile to be identified since the identification process works even when the element or pile to be identified is moved into the picking area and/or of the image-generating device is moved.

Especially, in optional step A3 of the inventive method, the extracted shape is compared with one or more predefined shapes, which are defined by predefined data models of building elements and/or piles. This can e.g. be realized by providing a database comprising a plurality of different predefined data models of building elements and/or piles. Such data models can for example be generated by computer aided design.

Especially, the comparison of the shapes takes into account geometrical similarity. This allows for example to decide whether certain building elements or piles thereof are present at a construction site and/or to assign gripping positions for robot-assisted further processing.

However, in still a further preferred embodiment, geometrical similarity as well as absolute dimensions are taken into account. In this manner, it is for example possible to check whether the building elements have a desired shape as well as to check whether their absolute dimensions are within a given tolerance.

Absolute dimensions in the images obtained in step A2 can e.g. be obtained via calibration, reference objects, reference markers, and/or combination of the image taking process with distance measurements, e.g. via a range sensor, especially a RGB-D sensor.

For example, in a picking area, reference markers, such as e.g. rulers, symbols identification tags can be placed, especially at predefined positions and/or distances. These reference markers then can be recognized in step A2 for determining absolute dimensions.

Subsequently, in optional step A4, it is possible to evaluate whether the extracted shape corresponds to one of the predefined shapes. Optionally, a deviation between the extracted shape and the corresponding predefined shape can be obtained. Thereby, the deviation can be determined with respect to the geometrical similarity and/or absolute dimensions.

Techniques for comparing shapes are known per se and can be implemented in various manner.

According to a further preferred embodiment, the method further comprises a step of identifying all individual building elements and/or piles in a predefined area. The area can e.g. be a storage area, especially the storage area of a construction site. Thereby, preferably, for each type of the identified individual building elements and/or piles in the predefined area the number of the identified individual building elements and/or piles is determined.

In an optional further step, it is checked whether the determined number equals a predefined number of required individual building elements and/or piles. The predefined number can e.g. be a derived from a construction plan of a building structure to be produced with the individual building elements and/or piles, from a delivery note and/or stock information.

In this manner it can in particular be checked if all of the individual building elements and/or piles required for a certain construction work are present at a job site and/or if all of the items ordered were delivered.

Further preferred, the method further comprises the step of classifying the individual building element or the pile in the image, especially depending on the comparison of step A3 and/or the evaluation of step A4.

For example, the step of classifying the individual building element or the pile in the image is performed as follows:
- if the extracted shape in step A3 corresponds to a predefined shape and/or the deviation is below a predefined threshold, the building element or the pile in the image is assigned to a first class, especially a class of matching elements;
- if the extracted shape in step A3 does not correspond to a predefined shape and/or the deviation is equal to or above a predefined threshold, the building element or the pile in the image is assigned to a second class, especially a class of non-matching elements.

Depending on the class attributed to the individual building element or the pile, it can be decided how to further proceed with respect to this element or pile. For example, if the individual building element or the pile is classified as non-matching, it can be moved and placed to a disposing area or simply be left at the initial position and be ignored in a later process. An individual building element or pile that is classified as matching can for example be subjected to further process steps.

However, different classifications might be possible as well, e.g. comprising more than two classes, e.g. three or more classes. Thereby, for example, more than one threshold can be defined allowing for example to classify the individual building elements or piles "highly precise", "sufficiently precise" and "unsuitable". This allow for example to use highly precise building elements for the construction of building structures with low tolerances whereas the sufficiently precise building elements can be used for the construction of building structures with higher tolerances.

According to a further preferred embodiment, the inventive method further comprises the step of assigning a planned gripping position in the image, whereby the gripping position defines a position at which the building element or pile is to be gripped with a gripping device for the purpose of movement of the building element or pile. The assigning of the planned gripping position in particular is based on corresponding information in the predefined data models of the building elements and/or piles and/or in a construction plan of a building structure to be produced.

For example, the predefined data models of the building elements and/or piles may comprise gripping positions for each type of building element or pile for a given gripping device. Thereby, the predefined data models may comprise several sets of gripping positions for different types of gripping devices.

This allows for picking up the building element or pile in a next step with a gripping device at the assigned gripping position and placing it at a specific location, especially in a predefined storage area, in a disposal area or in a processing area, and/or changing its orientation in space. By changing its orientation in space, building elements or piles e.g. can be oriented in a specific manner that facilitates further processing or allows for a more compact and/or ordered storage.

In an exemplary embodiment, the step of picking up the building element or pile can be performed as follows:
- if the extracted shape in step A3 corresponds to a predefined shape and/or the deviation is below a predefined threshold, the building element or pile is moved to a predefined storage area or a processing area;
- if the extracted shape in step A3 does not corresponds to a predefined shape and/or the deviation is equal to or above a predefined threshold, the building element or pile is left untouched or moved to a disposal area:

Thus, undesired building elements and/or piles can be separated from others and be sorted out.

According to another exemplary embodiment, in step A1 a pile of individual building elements is provided and an image of the pile is taken; and in step A2 the shape of the topmost building element of the pile of the is extracted; and, optionally, after step A4, the topmost building element is removed from the pile and placed in a storage area, especially such that the building elements in the storage area do not lie on top of each other or that only building elements of the same type do lie on top of each other.

Also, it is for example possible that after step A4, a building element and/or pile corresponding to a predefined shape is placed at a predefined storage area that is assigned to the respective predefined shape, in particular such that building elements and/or piles of the same shape are placed at the same predefined storage area in each case, whereas building elements and/or piles of different shape are placed at different predefined storage areas.

These measures allows for sorting of the building elements and/or piles, for example making further processing easier.

A further aspect of the present invention is directed to a method for producing individual building elements, which in particular are used for the construction of building structures made from several of the individual building elements, the method comprising the steps of:

| | |
|---|---|
| B1 | In a manufacturing process, especially a bending and/or cutting process, producing an individual building element or pile that is expected to have a predefined shape; |
| B2 | Performing the method as described above with the individual building element or the pile of step B1 as the building element or pile to be identified and the predefined shape of step B1 as the only predefined shape in steps A3 and A4; |
| B3 | Optionally, depending on the outcome of step B2, (i) providing the building element for further use, e.g. by placing it in a specific storage area or by feeding it into a processing area, or (ii) disposing the building element, e.g. by placing it in a disposal area; |
| B4 | Optionally, repeating steps B1 to B3. |

Thanks to the inventive method, the manufacturing process can directly be controlled in a very efficient manner. Especially, with this approach each individual building element or piles can be checked during the manufacturing process. Put differently, a quality control on the level of individual building element or piles can be implemented without need of modification or slowing down the manufacturing process. This makes it possible that only products that fulfill certain requirements are provided for further use, whereas other products are sorted out.

Also, in case of problems during the manufacturing, process parameters can be adjusted and/or the process can immediately be stopped in case maintenance or repair work is required.

In an exemplary embodiment, (i) the building element is provided for further use if the extracted shape in step A4 corresponds to the predefined shape and/or the deviation is below a predefined threshold and the building element is disposed if the extracted shape in step A4 does not corresponds to the predefined shape and/or the deviation is equal to or above a predefined threshold.

Further, the method may comprise the step of (i) adjusting one or more manufacturing parameters based on the deviation obtained in step A4 and (ii) in step B4, repeating steps B1 to B3 with the adjusted parameters. Th, especially if the extracted shape in step A4 corresponds to the predefined shape and/or the deviation is below a predefined threshold.

However, other implementations are possible as well.

In particular, in the manufacturing process, an individual reinforcing element or a pile of such elements is produced. The reinforcing element in particular is made from metal wires, especially in a bending and/or cutting process. Especially the building element is straight or a non-straight element, in particular a 2D structure made of metallic wire with at least one curvature.

Especially, it is possible that in the manufacturing process a pile of prefabricated building elements is produced. In this case, the individual building elements can e.g. be produced before and/or in another process. Thereby, the above-described manufacturing process in particular is a process of piling.

A still further aspect of the present invention is directed to a computer-implemented method for producing a building structure, especially a 3D reinforcement and/or formwork structure, from multiple individual building elements, preferably with a robotic system, the method comprising the steps of:

| | |
|---|---|
| C1 | Selecting a desired shape of an individual building element which is to be installed next, especially based on a digital construction plan of the building structure, especially the 3D reinforcement and/or formwork structure, whereby the desired shape is defined by a data model of the individual building element; |
| C2 | Producing or providing an individual building element that is expected to have a shape corresponding to the desired shape; |
| C3 | Performing the method for identifying individual building elements and/or piles as described above with the individual building element of step C2 as the building element to be identified and the desired shape as the only predefined shape in steps A3 and A4; |
| C4 | If the extracted shape in step A4 corresponds to the predefined shape and/or the deviation is below a predefined threshold, assigning a planned gripping position in the image, especially based on corresponding information in the digital construction plan of the building structure; otherwise, preferably, stop the production process or dispose the building element and start again with step C2; |
| C5 | Picking up the individual building element with a gripping device, especially of the robotic system, at the planned gripping position, |
| C6 | Placing the individual building element at a desired position and, preferably, assembling and/or joining it with a support element, a further element of the building structure and/or a further individual building element; |
| C7 | Optionally, repeating steps C1 to C6 until the building structure, especially the 3D reinforcement and/or formwork structure, is fully built. |

This method allows for a highly automated and efficient production of building structures, especially 3D reinforcement and/or formwork structures. Thereby, each individual building element can be can be checked to see whether it fulfils the desired requirements and/or tolerances. This will greatly enhance quality of the overall production process and the final building structure.

In particular, the building elements used and the building structure produced in this method are the same as describe above with the method for identifying individual building elements and/or piles and the method for producing individual building elements and/or a piles.

Especially, in the method for producing a building structure, a 3D reinforcement and/or formwork structure is produced, in particular a grid structure as described above. Thereby, preferably, a variety of straight and/or a non-straight elements, especially comprising 2D structures made of metallic wire with at least one curvature, are assembled and/or joined together.

For example, a variety of building elements in the form of shaped wires in the form of non-straight elements, especially bent wires, in particular shaped wires that comprise different shapes, curvatures, and/or extensions, are placed at defined positions, e.g. on a support, and then joined via further building elements, especially connecting wires.

In particular, in step C2, the individual building element is produced by the manufacturing method as described above.

Especially, assembling and/or joining in step C6 is effected through material, form-fit and/or force-fit connection.

For example, assembling and/or joining in step C6 is effected by welding. This is a highly efficient method in case of weldable building elements such as e.g. metallic wires or rebars. However, other assembling and/or joining techniques, such as e.g. riveting, interlocking and/or adhesively bonding, can be used alternatively or in addition.

In particular, during and/or after the production of the building structure, especially the 3D reinforcement and/or formwork structure, the shape of the partly built or fully built building structure is determined with a range sensor, especially a RGB-D sensor, which is mounted on a robotic system so that the entire building structure can be scanned with the sensor from different directions.

Thereby, the robotic system preferably is movable in one, two or three spatial directions. Instead or in addition to an RGB-D sensor, another range sensor can be used, e.g. an ultrasound distance sensor.

This allows for monitoring the production process in real time and/or to check the quality of the final building structure.

Specifically, the shape of the partly built or fully built building structure, especially the 3D reinforcement and/or formwork structure, is compared with a predefined data model of the building structure, especially the 3D reinforcement and/or formwork structure, especially to identify deviations between the structure and the model.

A further aspect of the present invention is directed to a system, especially an Identification system, comprising:
- an image-generating device, in particular mounted on a robotic system and/or fixed above a picking area;
- optionally a gripping device, especially a robotic gripping system that is moveable in one, two directions of space;
- a control unit that is configured to perform the method for identifying individual building elements and/or piles comprising a plurality of individual building elements method as described above.

Another aspect of the present invention is directed to a system, especially a manufacturing system, comprising:
- an image-generating device, in particular mounted on a robotic system and/or fixed above a picking area;
- a manufacturing device, especially a bending and/or cutting device;
- optionally a gripping device, especially a robotic gripping system that is moveable in one, two directions of space;
- a control unit that is configured to perform the method for producing individual building elements and/or piles comprising a plurality of individual building elements, as described above.

Furthermore, the invention in another aspect is directed to a system, especially a production system, comprising:
- a manufacturing device, especially a bending and/or cutting device:
- an image-generating device, in particular mounted on a robotic system and/or fixed adjacent the manufacturing device;
- a gripping device, especially mounted on a robotic gripping system that is moveable in one, two directions of space;
- optionally a placing and/or assembling device, especially a robotic placing device and/or a welding device;
- a control unit that is configured to perform the method producing a building structure, especially a 3D reinforcement and/or formwork structure as described above.

Especially, the robotic placing device is a robotic gripping system that is moveable in one, two directions of space. In particular, the welding device is mounted on the robotic gripping system.

Further advantageous embodiments and combinations of features of the invention result from the following detailed description and the totality of the patent claims.

### Brief description of drawings

The drawings used to explain the embodiment show:
- Fig. 1: A schematic illustration of a method for identifying individual building elements, e.g. reinforcing elements made of shaped steel rebars;
- Fig. 2: A schematic illustration of a method for producing shaped building elements;
- Fig. 3: A photographic image of a bending machine with a rotatable tool head in the course of bending a steel wire to form a building element as e.g. shown in Fig. 2;
- Fig. 4: A schematic illustration of a method for producing a 3D reinforcement structure from multiple individual building elements with a robotic system;
- Fig. 5: A photographic image of an individual reinforcing element in the form of a multi-component structure made from several interconnected steel wires on a picking table;
- Fig. 6: A photographic image of the picking up of the building element of Fig. 5 by a robotic systems having an electromagnetic gripping device;
- Fig. 7: A photographic image of the placing and joining of the building elements of Fig. 5 by the robotic systems on a support element and with previously placed building elements;
- Fig. 8: A graphical representation of a 3D reinforcement structure that was built by a process as described in connection with Fig. 4 and scanned with a RGB-D sensor mounted on a robotic system.

In principle, the same parts are given the same reference signs in the figures.

### Ways of carrying out the invention

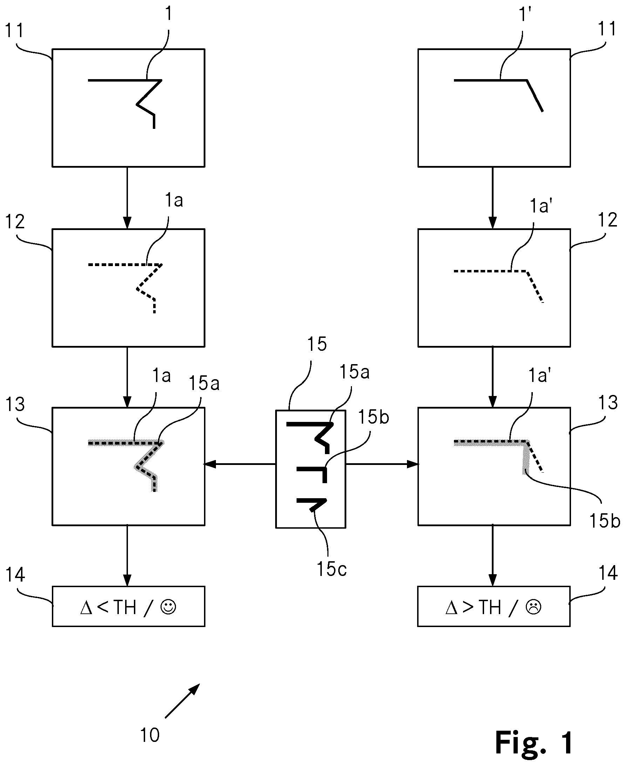

Fig. 1 schematically shows a method 10 for identifying individual building elements 1, 1', e.g. reinforcing elements made of shaped steel rebars.

On the left side, the method is shown with a first building element 1. In a first step, 11 an image of the building element 1 placed on a picking table is taken with an optical camera installed above the picking table in a fixed position. In the second step 12, an image analysis is performed whereby an algorithm determines which parts of the image are background and which parts belong to the individual building element 1 to be identified. The resulting contour is used to locate the building element in the image and to derive the shape 1a of the building element 1. In the subsequent step 13, the extracted shape 1a is compared with several predefined shapes 15a, 15b, 15c stored in a database 15. The predefined shapes 15a, 15b, 15c are defined by predefined data models of building elements. In the next step 14, it is evaluated whether the extracted shape 1a corresponds to one of the predefined shapes 15a, 15b, 15c, and a deviation of the spatial dimensions between the extracted shape 1a and the corresponding predefined shape 15a is calculated. In the exemplary case shown on the left side of Fig. 1, the shape 1a corresponds to the predefined shape 15a (indicated by " 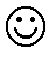 ") and the deviation Δ is below a given threshold TH. Thus, building element 1 could be identified and it was confirmed that its size and shape are within the given tolerances.

On the right side of Fig. 1, the method is shown with a second building element 1' that is different in design when compared to building element 1. The method is performed in the same manner as with the building element 1. However, as a result of step 14, it is established that the shape 1a' of the second building element 1' does not corresponds to one of the predefined shapes 15a, 15b, or 15c (indicated by " 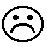 ") and the deviation Δ between shape 1a' and the predefined shape 15b, which is the most similar predefined shape, is higher than a given threshold TH. Thus, building element 1' could not be identified and its size and shape are not within the given tolerances.

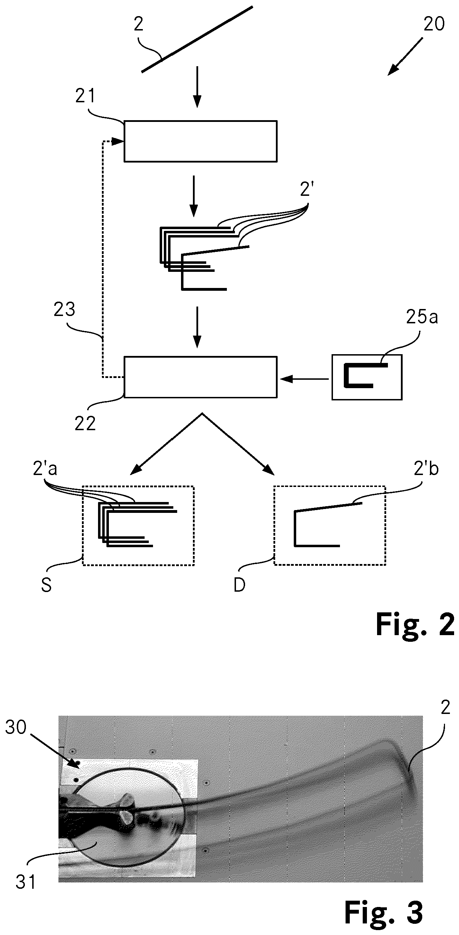

Fig. 2 schematically shows a method 20 for producing shaped building elements 2', e.g. reinforcing elements made of shaped steel rebars, in a manufacturing process.

In step 21, individual building elements 2' that are expected to have a predefined shape are produced in a bending and cutting process from straight metallic wires 2. Thereby, each of the building elements produced is subjected to an identification process 22, i.e. a process similar to the method shown in Fig. 1. In the identification process 22, the shape and size of the individual building elements 2' are compared with a predefined desired shape 15a and it is evaluated whether the extracted shape corresponds to the desired shape 25a, and a deviation of the spatial dimensions between the extracted shape and the desired shape 25a is calculated.

Depending on the outcome of step 22, building elements 2'a corresponding to the desired shape 25a and having dimensions within acceptable tolerances are provided for further use, e.g. by placing them in a specific storage area S and building elements 2'b not corresponding to the desired shape 25a or not having dimensions within acceptable tolerances are placed in a disposal area D.

Optionally, method 20 may further comprise a step 23 of adjusting one or more manufacturing parameters based on the deviation obtained in step 22. This is for example helpful, if the extracted shape in step 22 essentially corresponds to the predefined shape but there is a certain deviation with respect to absolute dimensions that is outside the given tolerances. This will help to improve the quality of the next building elements to be produced.

Fig. 3 shows a photographic image of a bending machine 30 with a rotatable tool head 31 in the course of bending a steel wire 2 to form a building element 2' as e.g. shown in Fig. 2.

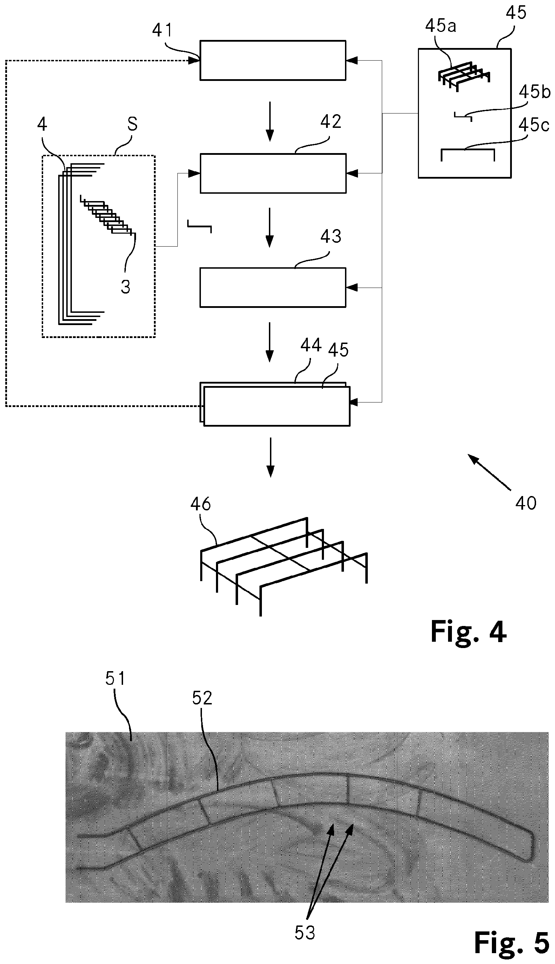

Fig. 4 schematically shows a method 40 for producing a 3D reinforcement structure 46 from multiple individual building elements 3, 4 with a robotic system.

In a first step 41, a desired shape 45b, 45c, of an individual building element which is to be installed next is selected based on a on a digital construction plan 45a of the 3D reinforcement structure to be produced. The digital construction plan 45a for example is stored in a database 45, together with the predefined shapes 45b, 45c of individual building elements required to produce the 3D reinforcement structure.

In the next step 42, an individual building element, e.g. element 3, that is expected to have a shape corresponding to the desired shape 45b and that is stored in a storage area S together with further building elements 3, 4, is provided in a picking area. Providing the building element 3 can e.g. be done manually and/or with an automatic feeding system, e.g. a robotic feeding system.

Subsequently, the building element 3 provided is subjected to an identification process 43, i.e. a process similar to the method shown in Fig. 1. In the identification process 43, the shape and size of the individual building element 3 is compared with the desired shape 45b by first taking an image of the building element with a camera and extracting its shape by image analysis. Subsequently, it is evaluated whether the extracted shape corresponds to the desired shape 45b, and, optionally, a deviation of the spatial dimensions between the extracted shape and the desired shape 45b can be calculated.

If the extracted shape in step 43 corresponds to the predefined shape 45b and the deviation is below a predefined threshold, a planned gripping position of the robotic device is assigned in the image of the individual building element 3, especially based on corresponding information in the digital construction plan of the building structure. Otherwise, if the extracted shape in step 43 does not corresponds to the predefined shape 45b or the deviation is above a predefined threshold, the building element 3 is disposed and the process is started again with step 41.

In the next step 44, the building element 3 is picked up with a gripping device of a robotic system at the planned gripping position. Then, in the last step 45, the building element 3 is placed at a desired position, which is defined in the construction plan 45a, and joined with further elements of the building structure. Steps 41 to 45 are repeated until the 3D reinforcement structure 46 is fully built.

Fig. 5 shows a photographic image of an individual reinforcing element 52 in the form of a multi-component structure made from several interconnected steel wires on a picking table 51. Furthermore, the gripping positions 53 for a gripping device are shown as an overlay in the image (diamond-like shapes at the end of the arrows). Fig. 5 is a specific example of a situation as described schematically in connection with steps 42 and 43 of Fig. 4.

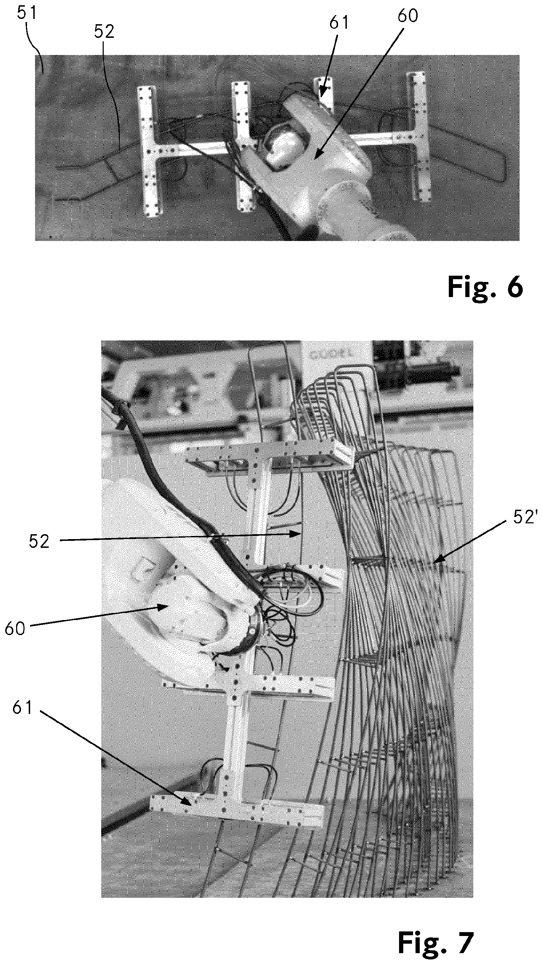

Fig. 6 shows a photographic image of the picking up of the building element 52 of Fig. 5 by a robotic systems 60 having an electromagnetic gripping device 61. Fig. 6 is a specific example of a situation as described schematically in connection with step 44 of Fig. 4.

Fig. 7 shows a photographic image of the placing and joining of the building element 52 of Fig. 5 by the robotic systems 60 on a support element and with previously placed building elements 52'. Fig. 7 is a specific example of a situation as described schematically in connection with step 45 of Fig. 4. In this case, the building elements 52, 52' after the building process has been completed form a 3D dimensional reinforcement and formwork structure that can be used for producing concrete structure.

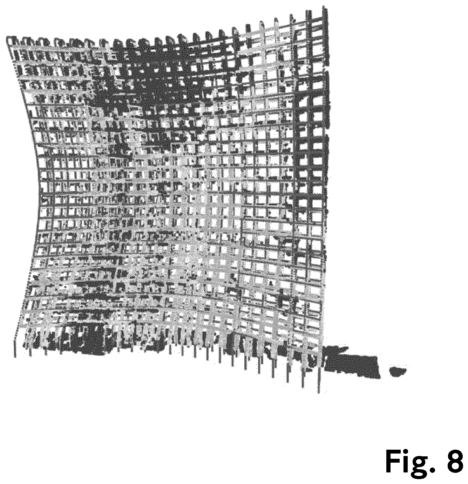

Fig. 8 shows a representation of a 3D reinforcement structure that was built by a process as described in connection with Fig. 4 and subsequently the shape of the structure was determined with RGB-D sensor that was mounted on a robotic system so that the entire 3D reinforcement structure could be scanned with the sensor from different directions. The so obtained shape can be compared with a predefined data model of the 3D reinforcement structure. In the representation of the 3D reinforcement shown in Fig. 8, deviations from the ideal shape or the predefined data model of the 3D reinforcement structure, respectively, are indicated by different colors.

While particular embodiments of the invention have been described, it is apparent to one skilled in the art that various variations and alternatives to the details described could be developed in the light of the disclosure as a whole. Accordingly, the particular arrangements and implementations of methods disclosed herein are intended only as an explanation and not as a limitation of the scope of protection.

For example, in the method of Fig. 1, steps 13 and 14 may be omitted, e.g. if the only data required is the shape of the building element. The shape of the building element can be used as such for manual comparison and/or any other purpose.

Instead or in addition to individual building elements, piles of building elements can be processed in the method shown in Fig. 1.

Also, in the method shown in Fig. 4, a further step of identifying all individual building elements in the storage area could be performed before starting the building process. This can be done by an additional an identification process as described in connection with Fig. 1 before starting the production process. Thereby, in particular, it can be checked whether the required types and number of individual building elements are present to finish the building structure as a whole. This information can e.g. be a derived from the construction plan of the building structure to be produced. Also, instead or in addition to individual building elements, piles of building elements can be identified in this manner.

Furthermore, the step of identifying all individual building elements in the storage area can be implemented independently of a production process. Thereby, individual building elements and/or piles of building elements can be identified in this manner. For example, such a method can be used for checking whether all individual building elements and/or piles thereof have been delivered to a construction site.

Likewise, the methods described in connection with Fig. 1 - 8 can be implemented with other building elements or piles thereof, e.g. elements made from synthetic materials, wood or composite materials.

## Claims

1. Computer-implemented method for identifying individual building elements and/or piles comprising a plurality of individual building elements, whereby the individual building elements in particular are intended for the construction of a building structure made from several of the individual building elements, the method comprising the steps of:
| | |
|---|---|
| A1 | Taking an image of an individual building element and/or a pile to be identified; |
| A2 | Performing an image analysis of the image to extract a shape of the building element and/or the pile in the image; |
| A3 | Optionally, comparison of the extracted shape with one or more predefined shapes, which are defined by predefined data models of building elements and/or piles; |
| A4 | Optionally, evaluating whether the extracted shape corresponds to one of the predefined shapes and, optionally, obtaining a deviation between the extracted shape and the corresponding predefined shape; |
| A5 | Optionally, repeating the steps with a next building element or pile to be identified. |

2. The method according to claim 1, whereby the individual building element is a reinforcement element and/or the pile comprises a plurality of individual reinforcing elements, whereby the individual reinforcing element(s) is/are intended for the construction of a 3D reinforcement and/or formwork structure made from several of the individual reinforcing elements.

3. The method according to any of preceding claims, whereby the method further comprises the step of classifying the individual building element or the pile in the image whereby:
- if the extracted shape in step A3 corresponds to a predefined shape and/or the deviation is below a predefined threshold, the building element or the pile in the image is assigned to a first class, especially a class of matching elements;
- if the extracted shape in step A3 does not correspond to a predefined shape and/or the deviation is equal to or above a predefined threshold, the building element or the pile in the image is assigned to a second class, especially a class of non-matching elements.

4. The method according to any of preceding claims, whereby the method further comprises the step of assigning a planned gripping position in the image, whereby the gripping position defines a position at which the building element or pile is to be gripped with a gripping device for the purpose of movement of the building element or pile, whereby the assigning of the planned gripping position in particular is based on corresponding information in the predefined data models of the building elements and/or piles.

5. The method according to any of proceeding claims, whereby:
- if the extracted shape in step A3 corresponds to a predefined shape and/or the deviation is below a predefined threshold, the building element or pile is moved to a predefined storage area or a processing area;
- if the extracted shape in step A3 does not corresponds to a predefined shape and/or the deviation is equal to or above a predefined threshold, the building element or pile is left untouched or moved to a disposal area.

6. The method according to any of preceding claims, whereby after step A4, a building element and/or pile corresponding to a predefined shape is placed at a predefined storage area that is assigned to the respective predefined shape, in particular such that building elements and/or piles of the same shape are placed at the same predefined storage area in each case, whereas building elements and/or piles of different shape are placed at different predefined storage areas.

7. Method for producing individual building elements and/or piles comprising a plurality of individual building elements, which in particular are used for the construction of building structures made from several of the individual building elements, the method comprising the steps of:
| | |
|---|---|
| B1 | In a manufacturing process, especially a bending and/or cutting process, producing an individual building element or a pile thereof that is expected to have a predefined shape; |
| B2 | Performing the method according to claim 1 with the individual building element or pile of step B1 as the building element or pile to be identified and the predefined shape of step B1 as the only predefined shape in steps A3 and A4; |
| B3 | Optionally, depending on the outcome of step B2, (i) providing the building element for further use, e.g. by placing it in a specific storage area or by feeding it into a processing area, or (ii) disposing the building element, e.g. by placing it in a disposal area; |
| B4 | Optionally, repeating steps B1 to B3. |

8. Method according to claim 7, whereby (i) the building element is provided for further use if the extracted shape in step A4 corresponds to the predefined shape and/or the deviation is below a predefined threshold and the building element is disposed if the extracted shape in step A4 does not corresponds to the predefined shape and/or the deviation is equal to or above a predefined threshold.

9. Method according to any of claims 7-8, further comprising the step of adjusting one or more manufacturing parameters based on the deviation obtained in step A4 and in step B4 repeating steps B1 to B3 with the adjusted parameters..

10. Computer-implemented method for producing a building structure, especially a 3D reinforcement and/or formwork structure from multiple individual building elements with a robotic system, the method comprising the steps of:
| | |
|---|---|
| C1 | Selecting a desired shape of an individual building element which is to be installed next, especially based on a digital construction plan of the building structure, especially the 3D reinforcement structure, whereby the desired shape is defined by a data model of the individual building element; |
| C2 | Producing or providing an individual building element that is expected to have a shape corresponding to the desired shape; |
| C3 | Performing the method according to any of claims 1 - 6 with the individual building element of step C2 as the building element to be identified and the desired shape as the only predefined shape in steps A3 and A4; |
| C4 | If the extracted shape in step A4 corresponds to the predefined shape and/or the deviation is below a predefined threshold, assigning a planned gripping position in the image, especially based on corresponding information in the digital construction plan of the building structure; otherwise, stop the production process or dispose the building element and start again with step C2; |
| C5 | Picking up the individual building element with a gripping device of the robotic system at the planned gripping position, |
| C6 | Placing the individual building element at a desired position and assembling and/or joining it with a support element, a further element of the building structure and/or a further individual building element; |
| C7 | Optionally, repeating steps C1 to C6 until the building structure, especially the 3D reinforcement and/or formwork structure, is fully built. |

11. The method according to claim 10, whereby during and/or after the production of the building structure, especially the 3D reinforcement structure, the shape of the partly built or fully built building structure, especially the 3D reinforcement and/or formwork structure, is determined with a range sensor, especially a RGB-D sensor, which is mounted on a robotic system so that the entire building structure can be scanned with the sensor from different directions.

12. The method according to claim 11, whereby the shape of the partly built or fully built building structure, especially the 3D reinforcement and/or formwork structure, is compared with a predefined data model of the building structure, especially the 3D reinforcement and/or formwork structure, especially to identify deviations between the structure and the model.

13. The method according to any of preceding claims, whereby the building element, especially the individual reinforcing element, is a non-straight element, especially a 2D structure made of metallic wire with at least one curvature and/or kink.

14. The method according to any of preceding claims, whereby the individual building element, especially the individual reinforcing element, is a multi-component structure, especially made from several interconnected wires, such as e.g. a mat-like structure.

15. A system, comprising:
- an image-generating device, in particular mounted on a robotic system and/or fixed above a picking area;
- a control unit that is configured to perform a method according to any of preceding claims.
- optionally a gripping device, especially a robotic gripping system that is moveable in one, two directions of space;
- optionally, a manufacturing device, especially a bending and/or cutting device;
- optionally, a placing and/or assembling device, especially a robotic placing device and/or a welding device.
